# EUROPEAN PATENT APPLICATION

(11) **EP 4 667 761 A1**
(43) Date of publication of application: **24.12.2025**
(21) Application number: 25180876.2
(22) Date of filing: 04.06.2025
(51) Int. Cl.: F16C 19/16, F16C 35/063, F16C 19/06, F16C 35/073

(54) **ACTUATOR FOR AUTOMOTIVE APPLICATIONS AND THE MANUFACTURING METHOD THEREOF**

(30) Priority: 20.06.2024 IT 202400014242
(71) Applicant: Marelli Europe S.p.A., 20011 Corbetta (MI) (IT)
(72) Inventor: VERDELLI, Stefano, I-20011 Corbetta, MILANO (IT); MUSOLESI, Stefano, I-20011 Corbetta, MILANO (IT); STANZANI, Giovanni, I-20011 Corbetta, MILANO (IT)
(74) Representative: Mitola, Marco

(57) **Abstract**

An actuator (4) comprising a shaft or tube (8) provided with a coupling seat (12) on an outer side wall (16) thereof, the shaft or tube (8) being made by the molding of a plastic material, a rolling bearing (20) comprising a metallic inner ring (24), a metallic outer ring (28) which is coaxial with respect to the inner ring (24) about a axis of rotation (X-X), and rolling bodies (32) interposed between said inner ring (24) and said outer ring (28) which enable relative rotation of said inner ring (24) with respect to said outer ring (28) about said axis of rotation (X-X), wherein the coupling seat (12) comprises a pair of axial shoulders (36) protruding by a radial height (40), along a radial direction (R-R) perpendicular to, and incident to, said axis of rotation (X-X), with respect to said outer side wall (16) of the shaft or tube (8), said axial shoulders (36) being axially spaced apart, along an axial direction parallel to said axis of rotation (X-X), so as to axially constrain the inner ring (24) with respect to the shaft or tube (8). Advantageously, said shaft or tube (8) being co-molded onto said inner ring (24) so as to axially constrain the inner ring (24) between said axial shoulders (36), wherein at least one injection point (60) of the plastic material of the shaft or tube (8) is arranged in proximity to said axial shoulders (36).

## Description

### FIELD OF APPLICATION

The present invention relates to an actuator for automotive applications and to the manufacturing method thereof.

### PRIOR ART

In general, in the automotive field, it is known to make actuators, for example for transmission devices, which comprise a shaft or tube associated with a bearing with rolling bodies.

Usually the shaft may be solid or hollow, the tube may constitute a nut screw; the nut screw may in turn be coupled using a screw. The screw or shaft may be connected to at least one gear, toothed wheel and the like.

The bearing comprises an inner ring and an outer ring, wherebetween said rolling bodies are arranged, allowing the relative rotation between said inner and outer rings.

The coupling between the inner ring of the bearing and the shaft or tube is a critical and delicate element.

In fact, such coupling normally takes place by means of an interference fit. An interference technique is not however always applicable. In particular, such technique is applicable between metallic parts, therefore between the inner ring of the bearing (which is metallic) and the shaft or tube which must also be made of a metallic material.

It is not therefore possible to apply an interference coupling between a bearing and a shaft or tube made of a resin, for example reinforced, or a polymeric material in general, except for applications with low torque transmission that involve a relatively low degree of interference.

Furthermore, in the automotive field, the shaft or tube often has to withstand significant axial loads that are directed along the prevailing extension axis (as well as the axis of rotation) of said shaft or tube. Such large loads are also cyclic fatigue loads and thus subject the components to considerable mechanical stress that must be appropriately absorbed by the coupling between the bearing and the shaft or tube.

### PRESENTATION OF THE INVENTION

The need to solve the drawbacks and limitations mentioned with reference to the prior art is therefore felt.

Such need is satisfied by an actuator according to claim 1 and a method according to claim 12.

### DESCRIPTION OF THE DRAWINGS

Further features and advantages of the present invention will become more apparent from the following detailed description of preferred and non-limiting embodiments thereof, wherein:

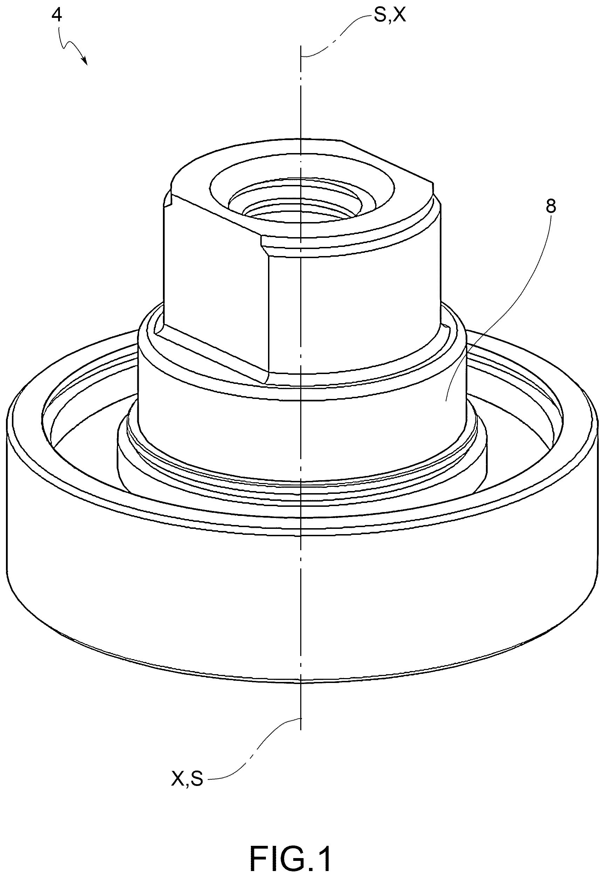

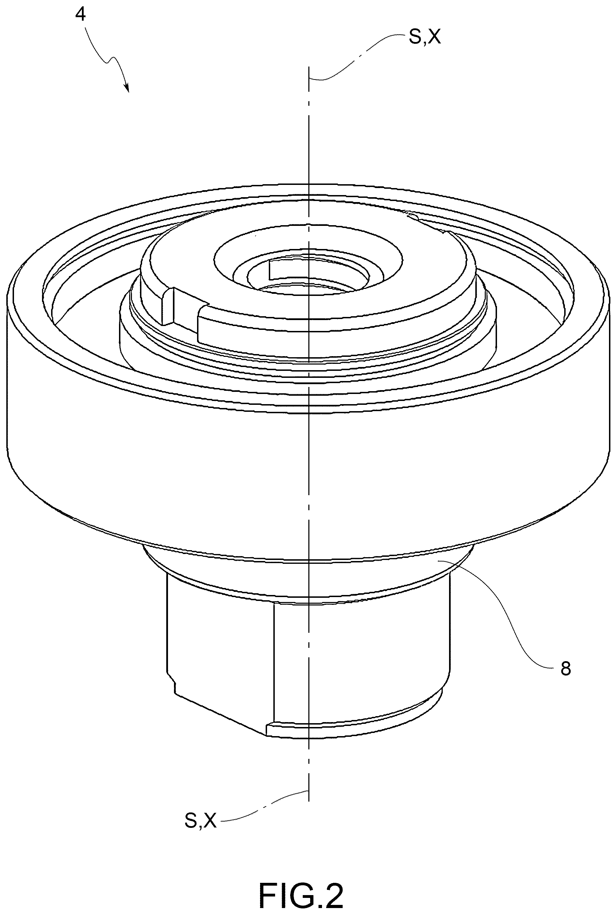

Figures 1-2 are perspective views, in an assembled configuration, and with different orientations, of an actuator for automotive applications according to one embodiment of the present invention;

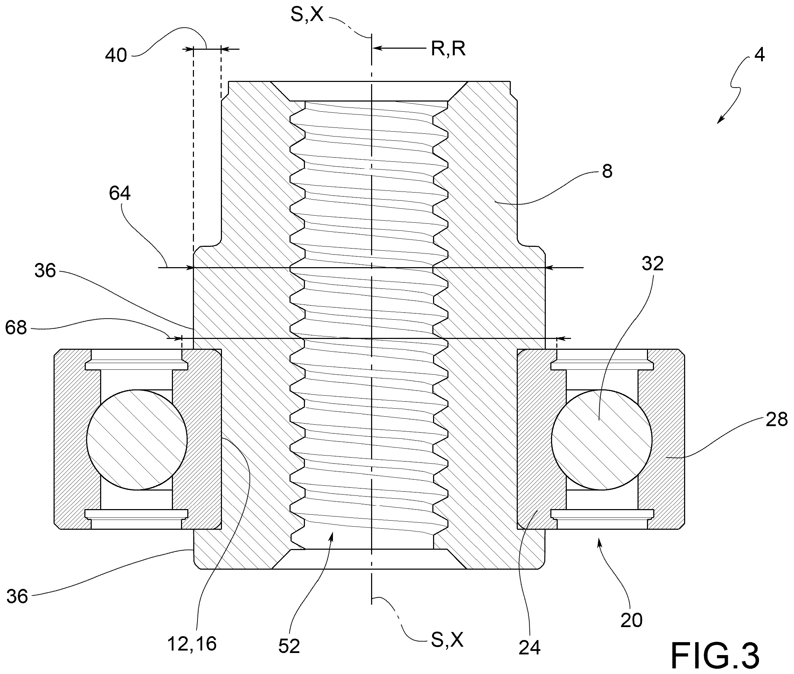

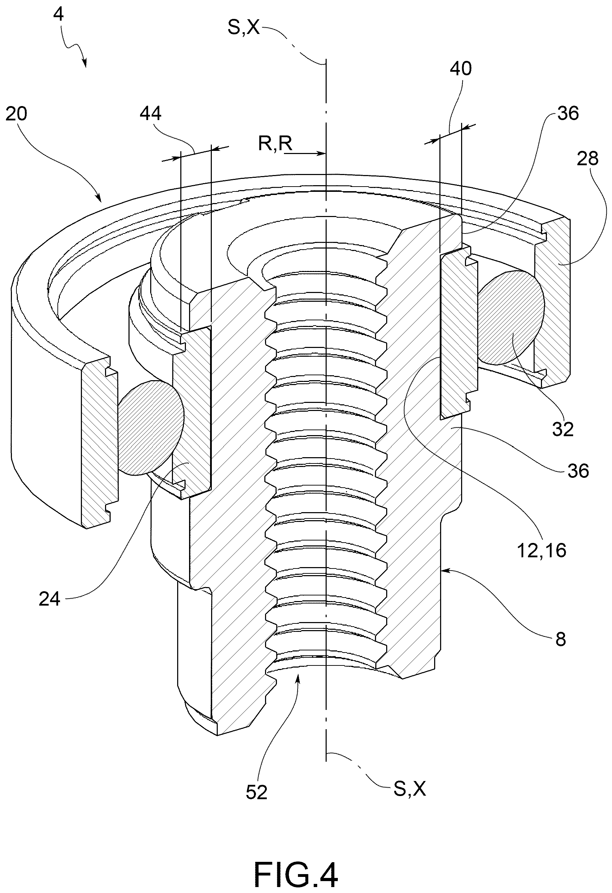

Figures 3-4 are cross-sectional perspective views of the actuators of Figures 1-2, respectively;

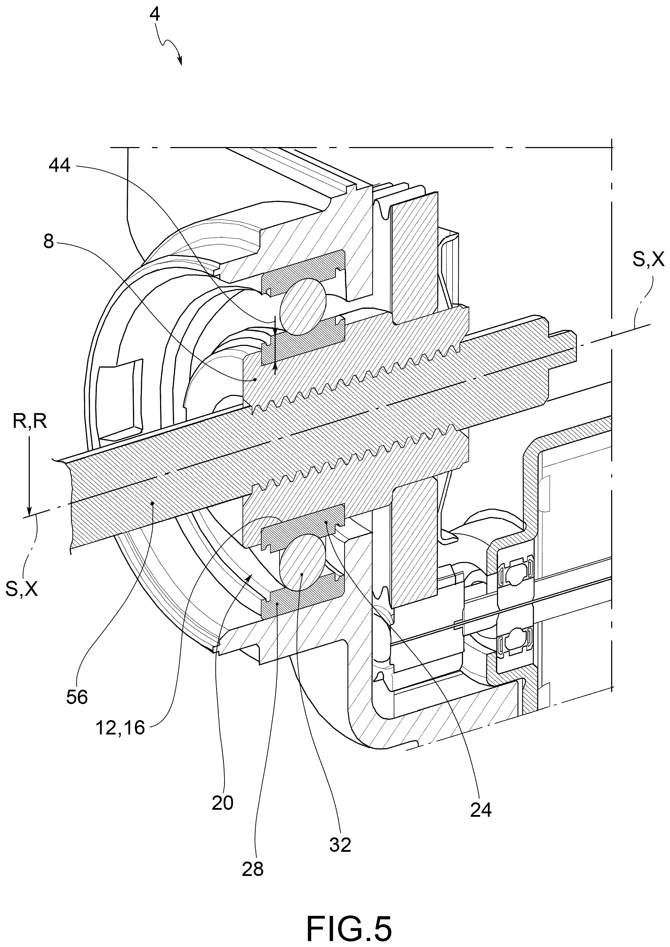

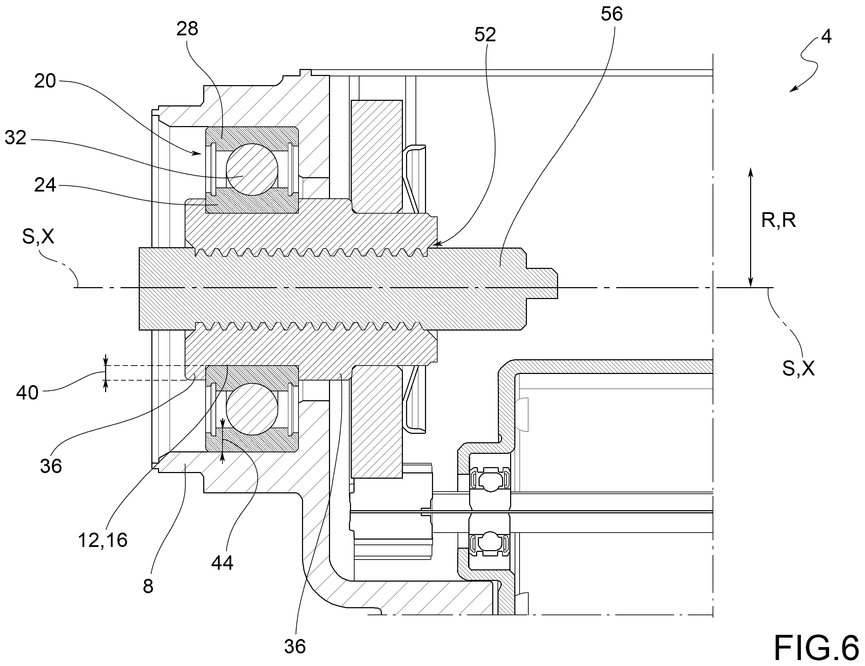

Figures 5-6 are cross-sectional views, in an assembled configuration, of an actuator according to a further embodiment of the present invention;
Figure 7 is a perspective view in separate parts of the actuator of Figures 5-6;
Figure 8 is an assembled perspective view of an actuator according to the present invention.

Those elements or parts of elements that are common to the embodiments described below will be indicated using the same numerical references.

### DETAILED DESCRIPTION

With reference to the aforesaid figures, an overall view of an actuator for automotive applications according to the present invention has been indicated collectively using the numeral 4.

The automotive applications of the present invention may be varied and do not constitute a limitation. Purely by way of illustration, it is possible to apply the invention to actuators for parking brakes, valves, gearboxes, actuators for a gearbox, etc.

The actuator 4 comprises a shaft or tube 8 provided with a coupling seat 12 arranged upon an outer side wall 16 thereof.

The shaft or tube 8 is axially symmetrical, with a circular cross-section, about an axis of symmetry S-S; furthermore, the shaft or tube is made by means of the molding of a plastic material, as better described below.

The actuator 4 further comprises a rolling bearing 20 comprising a metallic inner ring 24, a metallic outer ring 28, coaxial with respect to the inner ring 24 about a axis of rotation X-X, parallel to said axis of symmetry S-S of the shaft or tube 8.

The actuator 4 further comprises rolling bodies 32, interposed between the inner ring 24 and the outer ring 28 which enable relative rotation of said inner ring 24 with respect to said outer ring 28, about said axis of rotation X-X.

Said rolling bodies 32 may comprise balls or rollers. Preferably, said rolling bearing 20 is of the mixed, axial and radial type. In other words, the rolling bearing 20 is configured to support both axial loads, parallel to the axis of rotation X-X, and radial loads, along a radial direction perpendicular to, and incident to, said axis of rotation X-X.

The coupling seat 12 of the shaft or tube 8 comprises a pair of axial shoulders 36 protruding by a radial height 40, along a radial direction R-R perpendicular to, and incident to, said axis of rotation X-X, with respect to said outer side wall 16 of the shaft or tube 8.

In particular, said axial shoulders 36 are spaced apart axially, along the axial direction parallel to said axis of rotation X-X, so as to axially constrain the inner ring 24 of the rolling bearing 20 with respect to the shaft or tube 8.

In other words, said axial shoulders 36 are exactly spaced apart by the axial width of the inner ring 24 of the rolling bearing 20, so as to create a bilateral axial constraint for said inner ring 24.

As mentioned above, the shaft or tube 8 is made of a plastic material; in particular, said shaft or tube 8 is co-molded onto said inner ring 24 so as to axially constrain the inner ring 24 between said axial shoulders 36.

The radial height 40 of the axial shoulders 36 is preferably less than a radial thickness 44 of the inner ring 24, along said radial direction R-R.

It should be noted that, for the purposes of the strength of the component to be molded, it would be optimal for said axial shoulders 36 to have exactly the same inner diameter as the inner ring 24 (said fifth wheel) of the rolling bearing 20; in other words, a 100% radial covering would be desirable or, in other words, for each axial shoulder to have exactly the inner diameter of the inner ring 24.

However, this condition of maximum radial coating poses the definite risk that the molten plastic may, during molding, inadvertently flow into the rolling bearing 20 thereby compromising the operation thereof.

Thus it has been found that in order to stem the flow of molten plastic during molding, and to prevent it from contaminating the rolling bearing 20, it is advantageous to reduce the contact and clamping area between the injection mold and the inner ring 24. In particular, it has been found that the best compromise between the mechanical resistance/adhesion amongst the parts and the shielding from molten plastic of the rolling bearing 20, is achieved by requiring that a maximum diameter 64 of the axial shoulders 36 be of between 70% and 80% of the internal diameter 68 of the inner ring 24.

This dimensional arrangement imparts a specific advantage. During the co-molding step, the plastic material is in fact prevented from flowing into the volume of the rolling bearing 20 which houses the rolling bodies 32.

As mentioned above, the axial shoulders 36 are components that are mechanically extremely stressed. For this reason, it is important that the molding ensures optimal adhesion between the same axial shoulders 36 and the inner ring 24.

Furthermore, following the molding step, said axial shoulders 36 must be particularly compact and strong. For this purpose the injection molding should provide for certain special arrangements aimed at ensuring the correct molding and adequate mechanical strength of those points that are stressed the most.

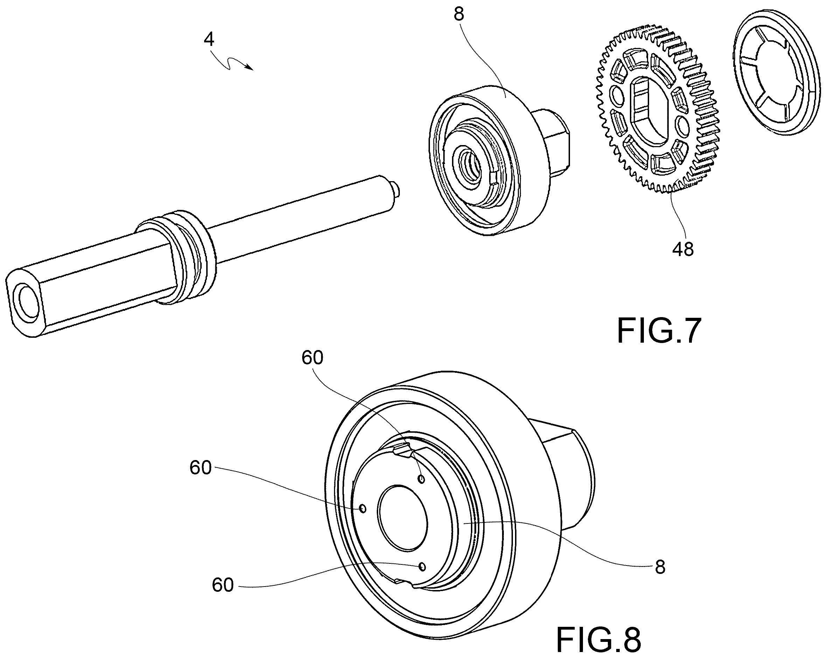

Advantageously (Figure 8), the positioning of at least one injection point 60 of the plastic material is envisaged in proximity to said axial shoulders 36, which constitutes the area of the component that is the most mechanically stressed: in this way, after the molding step, it has been seen that greater compaction of the material is possible. In fact, during the post-molding cooling step, the press continues to deliver a load to the still hot and slightly fluid material thereby helping to improve the properties of that material that is in proximity to the injection points, and therefore in proximity to said axial shoulders 36, which therefore result in being particularly compact and strong.

According to one embodiment (Figure 8), the possibility is provided of using multiple injection points 60 in proximity to said axial shoulders 36: in this way, filling the mold with molten material is further improved, and the distribution of glass fibers embedded within the molten plastic material is homogenized thereby increasing the toughness of the molded plastic component.

Preferably (Figure 8), three injection points 60 are provided that are angularly equally spaced apart therebetween with respect to the axis of rotation X-X.

According to one possible embodiment, the material of the shaft or tube 8 comprises molybdenum disulfide and/or Teflon. These are particularly materials having lubricating properties, the use of which is advantageous insofar as it makes it possible to avoid the use of lubricants, such as oils or grease, within the volume of the rolling bearing 20 which houses the rolling bodies 32. In other words, the self-lubricating additive, such as molybdenum disulfide and/or Teflon, acts as a lubricant for the rolling bodies 20.

According to one possible embodiment, the material of the shaft or tube 8 comprises PA66-GF50.

As mentioned above, the actuator 4 may have various applications.

For example, at least one toothed wheel 48 and/or a torque take-off may be connected to the shaft or tube 8.

Preferably, but not necessarily, said tube 8 is hollow and delimits a nut screw 52 wherein a threaded shaft 56, operatively connected to a power take-off, is engaged.

The method for manufacturing an actuator for automotive applications according to the present invention will now be described.

In particular, the method provides for the step of providing a rolling bearing 20 comprising a metallic inner ring 24, a metallic outer ring 28, coaxial with respect to the inner ring 24 about an axis of rotation X-X, and rolling bodies 32 interposed between the inner ring 24 and the outer ring 28 so as to allow for relative rotation between said inner and outer rings 24,28 about said axis of rotation X-X.

The method then proceeds to the step of overmolding, using a plastic material, upon said inner ring 24, a shaft or tube 8 that is provided with a coupling seat 12 on the outer side wall 16 thereof,

In particular, the coupling seat 12 comprises a pair of axial shoulders 36 protruding by a radial height 40, along a radial direction R-R perpendicular to, and incident to, said axis of rotation X-X, with respect to said outer side wall 16 of the shaft or tube 8.

The axial shoulders 36 are axially spaced apart, along an axial direction parallel to said axis of rotation X-X, so as to axially constrain the inner ring 24 with respect to the shaft or tube 8.

In particular, the axial distance between the axial shoulders 36 is precisely equal to the axial thickness of the inner ring 24.

The radial height 40 of the axial shoulders 36 is preferably less than a radial thickness 44 of the inner ring 24, along said radial direction R-R.

The material of the shaft or tube 8 preferably comprises molybdenum disulfide and/or Teflon.

For example, the material of the shaft or tube 8 comprises PA66-GF50.

According to one possible embodiment, before overmolding, the step of pre-heating the rolling bearing 20 is envisaged, before entering the mold, at a temperature equal to about 50% of the molding temperature of the plastic material.

By virtue of such pre-heating step it is possible to obtain good adhesion between the components of the actuator 4, in particular between the inner ring 24 and the shaft or tube 8.

In particular, it would be preferable to increase the temperature of the metallic element to be molded, i.e., the ring of the bearing, in order to facilitate optimal flowing of the molten plastic and to allow it to optimally adhere to the surface of said element.

It would therefore be optimal to increase the temperature of the rolling bearing 20 (ball bearing, rollers, etc.) until the operating temperature of the mold has been reached; in other words, it would theoretically be preferable to preheat the mold to 100% of the melting temperature of the injected plastic; in reality, it has been possible to verify that preheating the mold to a temperature of between 50% and 60% of the melting temperature of the injected plastic material makes it possible to ensure optimal adhesion of the plastic to the bearing without, moreover, damaging the gaskets (which are typically made of rubber) and the lubricant which pre-distributed inside the rolling bearing 20.

As may be appreciated from that described, the present invention overcomes the drawbacks presented in the prior art.

In particular, the actuator comprises a coupling between the shaft or tube and the rolling bearing, obtained by overmolding. Such coupling is capable of transmitting considerable torque, greater than that of known solutions which instead provide an interference fit.

The provision of axial shoulders which are overmolded with respect to the inner ring, allows for strong adhesion between the inner ring and the shaft or tube to be obtained. In fact, with cooling and consequent shrinkage following the molding, the shoulders tend to close over the inner ring thereby increasing the fastening thereof.

Advantageously, the positioning of at least one injection point of the plastic material is envisaged in proximity to the axial shoulders which constitute the area of the component that is the most mechanically stressed: in this way, it has been seen that greater compaction of the material after molding is possible. In fact, during the post-molding cooling step, the press continues to deliver a load to the still hot and slightly fluid material thereby helping to improve the properties of that material that is in proximity to the injection points, and therefore in proximity to said axial shoulders, which therefore result in being particularly compact and strong. By virtue of this arrangement it is possible to obtain a mechanical component that is particularly resistant not only to heavy loads but also, in particular, to cyclic fatigue loads.

The use of an additive (such as molybdenum disulfide or Teflon) having a lubricating function within the plastic material facilitates the molding step and adhesion to the inner ring.

Moreover, by virtue of the lubricant embedded in the plastic material, it is possible to avoid filling the chambers of the rolling bodies with bearing grease.

In this way, the rolling bodies are lubricated more economically. The solution also weighs and costs less than classic solutions and is not subject to maintenance (such as, for example, replacement or refilling with grease).

In other words, molybdenum disulfide is used as a self-lubricating additive within the plastic material which avoids the use of additional lubricants within the actuator.

Moreover, molybdenum disulfide (MoS?) is an additive with a lower environmental impact than typically used Teflon based additives and, furthermore, molybdenum disulfide is not subject to usage restrictions in the near future (unlike PTFE).

The height of the axial shoulders is suitably chosen so as to, on the one hand ensure adhesion to the shaft or tube, and on the other hand prevent the molded plastic material from flowing into the chamber containing the rolling bodies.

Advantageously, to ensure the success of the plastic molding process and to obtain optimal adhesion between the parts, the bearing is pre-heated before entering the mold at a temperature equal to about 50%-60% of the molding temperature of the plastic material. In this way, proper overmolding and therefore optimal anchoring between the shaft or tube and the inner ring of the rolling bearing is ensured. At the same time, damage is avoided to the gaskets (which are typically made of rubber) and to the lubricant that is pre-distributed inside the rolling bearing.

A person skilled in the art, in order to satisfy contingent and specific needs, may make numerous modifications and variations to the solutions described above.

The scope of protection of the invention is defined by the following claims.

### List of references

4: actuator
8: shaft or tube
12: coupling seat
16: outer side wall
20: rolling bearing
24: inner ring
28: outer ring
32: rolling bodies
36: axial shoulders
40: radial height
44: radial thickness
48: toothed wheel
52: nut screw
56: threaded shaft
60: injection points
64: maximum diameter
68: inner diameter
S-S: axis of symmetry
X-X: axis of rotation
R-R: radial direction

## Claims

1. Actuator (4) comprising:
- a shaft or tube (8) provided with a coupling seat (12) on an outer side wall (16) thereof, the shaft or tube (8) being made by molding plastic material,
- a rolling bearing (20) comprising a metallic inner ring (24), a metallic outer ring (28) which is coaxial with respect to the inner ring (24) about a axis of rotation (X-X), and rolling bodies (32) interposed between said inner ring (24) and said outer ring (28) which enable relative rotation of said inner ring (24) with respect to said outer ring (28) about said axis of rotation (X-X),
- wherein the coupling seat (12) comprises a pair of axial shoulders (36) protruding by a radial height (40), along a radial direction (R-R) perpendicular to, and incident to, said axis of rotation (X-X), with respect to said outer side wall (16) of the shaft or tube (8), said axial shoulders (36) being axially spaced apart, along an axial direction parallel to said axis of rotation (X-X), so as to axially constrain the inner ring (24) with respect to the shaft or tube (8),
- said shaft or tube (8) being co-molded onto said inner ring (24) so as to axially constrain the inner ring (24) between said axial shoulders (36), wherein at least one injection point (60) of the plastic material of the shaft or tube (8) is arranged in proximity to said axial shoulders (36).

2. The actuator (4) according to claim 1, wherein multiple injection points (60) are provided in proximity to said axial shoulders (36).

3. Actuator (4) according to claim 2, wherein three injection points (60) are provided that are angularly equally spaced apart therebetween with respect to the axis of rotation (X-X) at said axial shoulders (36).

4. Actuator (4) according to claims 1, 2 or 3, wherein the radial height (40) of the axial shoulders (36) is less than a radial thickness (44) of the inner ring (24), along said radial direction (R-R).

5. Actuator (4) according to claim 4, wherein a maximum diameter (64) of the axial shoulders (36) is comprised of between 70% and 80% of an inner diameter (68) of the inner ring (24) of the rolling bearing (20).

6. Actuator (4) according to any one of the claims from 1 to 5, wherein the material of the shaft or tube (8) comprises molybdenum disulfide and/or Teflon.

7. Actuator (4) according to any one of the claims from 1 to 6, wherein at least one toothed wheel (48) and/or a torque take-off is connected to the shaft or tube (8).

8. Actuator (4) according to any one of the claims 1 to 7, wherein said rolling bodies (32) comprise balls or rollers.

9. Actuator (4) according to any one of the claims 1 to 8, wherein said tube (8) is hollow and delimits a nut screw (52) wherein a threaded shaft (56) is engaged, operatively connected to a power take-off.

10. Method for manufacturing an actuator comprising the steps of:
- providing a rolling bearing (20) comprising a metallic inner ring (24), a metallic outer ring (28) which is coaxial with respect to the inner ring (24) about an axis of rotation (X-X), and rolling bodies (32) interposed between said inner ring (24) and said outer ring (28) which enable relative rotation of said inner ring (24) with respect to said outer ring (28) about said axis of rotation (X-X),
- overmolding in plastic material, onto said inner ring (24), a shaft or tube (8) provided with a coupling seat (12) on an outer side wall (16) thereof,
- wherein the coupling seat (12) comprises a pair of axial shoulders (36) protruding by a radial height (40), along a radial direction (R-R) perpendicular to, and incident to, said axis of rotation (X-X), with respect to said outer side wall (16) of the shaft or tube (8), said axial shoulders (36) being axially spaced apart, along an axial direction parallel to said axis of rotation (X-X), so as to axially constrain the inner ring (24) with respect to the shaft or tube (8),
- wherein at least one injection point (60) of the plastic material of the shaft or tube (8) is arranged in proximity to said axial shoulders (36).

11. Method according to claim 10, comprising the step of injecting the plastic material through multiple injection points (60) arranged in proximity to said axial shoulders (36).

12. Method according to claim 11, wherein three injection points (60) are provided that are angularly equally spaced apart therebetween with respect to the axis of rotation (X-X) at said axial shoulders (36).

13. Method according to claims 10, 11 or 12, wherein the radial height (40) of the axial shoulders (36) is less than a radial thickness (44) of the inner ring (24), along said radial direction (R-R).

14. Method (4) according to claim 13, wherein a maximum diameter (64) of the axial shoulders (36) is comprised of between 70% and 80% of an inner diameter (68) of the inner ring (24) of the rolling bearing (20).

15. Method according to any one of the claims from 10 to 14, wherein, before overmolding, the step of pre-heating the rolling bearing (20) is envisaged, before entering the mold, at a temperature equal to about 50% to 60% of the molding temperature of the plastic material.
